# FASCICULE DE BREVET EUROPEEN

(11) **EP 2 067 617 B1**
(45) Date de publication et mention de la délivrance du brevet: **14.10.2009**
(21) Numéro de dépôt: 07122260.8
(22) Date de dépôt: 04.12.2007
(51) Int. Cl.: B32B 27/06, B29C 45/14

(54) **Procédé de surmoulage de céramique et élément composite obtenu par ce procédé.**
Keramik-Abformverfahren und durch dieses Verfahren erhaltenes Verbundelement
Method for overmoulding ceramic and composite element obtained by this method

(43) Date de publication de la demande: 10.06.2009
(73) Titulaire: N.C.A. Technologies, 7110 Strepy-Bracquegnies (BE)
(72) Inventeur: Ruffaldi, Aldo, 1950, Kraainem (BE); Guillotin, François Ph.D, Beaver Falls, PA 15010 (US)
(74) Mandataire: Vandeberg, Marie-Paule L.G.

(56) Documents cités:
- CH-A- 539 495
- FR-A- 2 683 482
- GB-A- 2 126 655
- US-A- 4 309 937
- DATABASE WPI Week 200114 Derwent Publications Ltd., London, GB; AN 2001-127788 XP002481517 -& JP 2000 309031 A (IBIDEN CO LTD) 7 novembre 2000 (2000-11-07)

## Description

### Domaine de l'invention

L'invention se rapporte à un procédé permettant de fabriquer des éléments céramiques composites spécialement adaptés à la manutention et au conditionnement de fluides ou de produits pâteux ou pulvérulents, notamment pour les industries alimentaire, pharmaceutique et chimique.

L'invention se rapporte aussi à des éléments réalisés par une telle méthode.

### État de la technique

On connaît les avantages des matériaux céramiques, de haute technicité : grande dureté, résistance mécanique, tenue à l'usure et à la corrosion élevées, faible coefficient de frottement, faible taux de relargage de particules, faible dilatation thermique. D'énormes progrès ont également été réalisés dans la qualité du moulage, qui permet de réaliser des pièces d'une précision et d'un état de surface inégalé. En contrepartie, la céramique est un matériau cassant et donc très difficile à usiner. En conséquence, la céramique est fréquemment associée à un matériau de support.

Le demandeur est ainsi spécialisé dans la fabrication d'éléments de dosages, tels des pompes, spécialement adaptés à la manutention et au conditionnement de fluides ou de produits pâteux notamment pour les industries alimentaire, chimique et pharmacologique. Dans ces éléments suivant l'état de la technique, on associe couramment la céramique pour les éléments de pompes en contact avec les fluides, les poudres ou des produits pâteux avec l'acier inoxydable, ce dernier servant pour les enveloppes supportant les éléments de solidarisation des pompes avec les autres éléments de circuits (flasques, éléments de raccords, manettes, etc.).

Cette association, malgré ses avantages techniques et technologiques, n'est pas dépourvue de limitations. En dépit de la possibilité de travailler avec des tolérances sans cesse plus réduites (de l'ordre du micromètre), quand on descend au-dessous d'une certaine échelle il devient en effet difficile d'obtenir un contact intime entre les deux matériaux associés. Or, dans les industries mentionnées plus haut il est impératif d'éviter la formation d'interstices où pourraient se loger des dépôts et/ou se développer des micro-organismes. Les exigences d'hygiène et de pureté ont un impact direct sur les installations de production, elles aussi soumises à des réglementations légales contraignantes et en pleine évolution.

On a donc cherché à associer la céramique avec d'autres matériaux, permettant un contact plus intime entre les différents composants, et on a par ailleurs cherché à réduire les coûts de production. On a notamment cherché à associer la céramique à des matériaux polymères.

On connaît FR-2683482 qui décrit des récipients tubulaires tels que flacons en verre ou céramique utilisés en cosmétologie, dont les bouchons, munis de diffuseurs, sont solidarisés au goulot par un manchon en matière polymère qui est surmoulé sur ce goulot. Le goulot est en outre pourvu de reliefs d'accrochage axial et anti-rotation destinés à assurer une meilleure fixation du manchon sur le goulot. Ces reliefs d'accrochage axial et anti-rotation du goulot consistent en des reliefs longitudinaux (stries) et en un relief annulaire situé en dessous de ces reliefs longitudinaux.

JP-2000/309031 décrit un article comprenant un corps en céramique sur lequel est surmoulé un disque polymérique. Le surface du cylindre en contact avec le disque polymérique comporte un évidement sur les bords duquel ont été formées des encoches afin d'augmenter la résistance générale de l'article décrit.

US-4 309 937 décrit un maître-cylindre composite comprenant un coeur cylindrique fait en matière métallique ou céramique sur lequel est surmoulé une enveloppe en matière plastique. La surface du coeur cylindrique en contact avec l'enveloppe est munie de rainures annulaires destinées à sécuriser l'enveloppe et empêcher tout mouvement relatif du coeur cylindrique.

On connaît par ailleurs US 2003/0171817 qui décrit des prothèses fémorales associant des parties en céramique et des parties en polyéthylène. Une telle prothèse composite, implantée dans le corps humain, ne subit que des sollicitations mécaniques modérées et n'est jamais soumis à d'importants écarts de températures.

Toutefois, une telle association est a priori inenvisageable dans le cas d'éléments des industries de conditionnement de fluides, de produits pulvérulents ou pâteux. En effet, un des critères essentiels est que les pièces doivent pouvoir être nettoyées, désinfectées et stérilisées, et travailler par ailleurs à des températures de régime relativement basses pour éviter l'altération des produits à conditionner. En conséquence, ces éléments de dosage sont censés pouvoir subir des transitions de températures allant, par exemple dans le cas de l'industrie alimentaire, de -10°C à +140°C, ce qui entraîne des contraintes que l'on peut qualifier d'« extrêmes » pour une telle association de matériaux. En effet, les céramiques, à l'inverse des matériaux polymères avec lesquels on souhaite les associer, se distinguent par leur très faible coefficient de dilatation, gage des tolérances élevées que l'on exige d'elles. En outre, les matériaux polymères, en particulier les thermoplastiques, voient leurs performances mécaniques se dégrader fortement à température élevée.

Les installations et outillages utilisés imposent donc la mise en oeuvre de solutions résistant aux contraintes thermiques et mécaniques imposées, fiables, flexibles, faciles d'entretien in situ et hygiéniques.

La présente invention est définie par les revendications indépendantes. Des modes de réalisation préférés sont définis par les revendications dépendantes.

### Résumé de l'invention

Un but de l'invention est de mettre sur le marché des éléments composites de conditionnement de fluides en céramique résistant à de forts écarts de température, de façon à pouvoir supporter sans problème les conditions de nettoyage et notamment de stérilisation in situ.

Un autre but de l'invention est que ces pièces composites soient dépourvues d'interstices, sans avoir besoin de joints d'étanchéité.

Un autre but de l'invention est que ces pièces bénéficient d'une longue durée de vie.

Un autre but de l'invention est que ces pièces puissent être utilisées dans des procédés de fabrication de produits alimentaires, pharmaceutiques ou chimiques.

L'objet de l'invention est un organe d'un élément de dosage de fluides et de produits pâteux présentant une interface en substance cylindrique apte à résister à des chocs thermiques et/ou des sollicitations mécaniques. Cet organe comprend, disposés concentriquement l'un par rapport à l'autre :
- une partie en matériau céramique destinée à venir en contact avec le fluide présentant une surface extérieure en substance cylindrique
- un support en matériau polymère surmoulé sur la partie en matériau céramique.

La partie en matériau céramique porte, sur sa face latérale externe, au moins un relief comprenant au moins une vainure hélicoïdale dextrogyre et au moins une vainure hélicoïdale levogyre empêchant tout mouvement relatif de cette partie et du support. Ce ou ces reliefs répartit les tensions créées par la différence entre les coefficients de dilatation des matériaux céramique et polymère tant en régime que durant les étapes de nettoyage. On notera que, suivant le mode de réalisation, le matériau polymère peut éventuellement venir en contact avec le produit transporté et qu'il doit donc répondre tant à des critères de résistance que d'hygiène.

Suivant un premier mode de réalisation avantageux, la partie en matériau céramique est une pièce femelle en forme d'un fourreau, le support en matériau polymère formant une enveloppe surmoulée sur la face latérale extérieure de ce fourreau en céramique. Cet organe est, par exemple, un corps de pompe ou un insert.

Suivant un autre mode de réalisation avantageux, la partie en matériau céramique est une pièce cylindrique mâle. Le support en matériau polymère forme une enveloppe recouvrant une des extrémités de la face latérale extérieure de cette pièce cylindrique. Cet organe est, par exemple, un piston.

Suivant une première forme de réalisation avantageuse, le relief comprend au moins une rainure s'étendant radialement sur la surface latérale extérieure de la pièce cylindrique. Suivant un mode de réalisation préféré, cette au moins une rainure périphérique est disposée près d'au moins une des extrémités de la surface de la partie en céramique en contact avec le support en matériau polymère.

Le relief a, suivant un mode de réalisation préféré, une profondeur comprise entre 0,25 et 0,40 mm.

Suivant un mode de réalisation préféré, le relief s'étend sur la majeure partie de la surface de la partie céramique en contact avec le support en matériau polymère.

Suivant un mode de réalisation avantageux, le relief est réalisé par usinage.

Le matériau céramique est choisi de préférence au sein du groupe [alumine, zircone, nitrure de silicium et leurs composés, tels le sialon®, etc.]

Le polymère du support est choisi avantageusement au sein du groupe [PPS, PPSU, PSU, PEEK, PEI, PES, PVDF et autres]

Une extrémité au moins de la partie en céramique en contact avec le support en matériau polymère est, de façon avantageuse, chanfreinée.

Un autre objet de l'invention est un procédé d'assemblage d'un organe d'un élément de conditionnement de fluide composite apte à résister à des chocs thermiques et/ou des sollicitations mécaniques. Ce procédé comprend les opérations suivantes :
- Préparation d'un mélange de composition adéquate pour l'obtention après cuisson d'un matériau céramique adapté à l'usinage. Ce mélange, de consistance pâteuse, est généralement constitué de poudres minérales et de liants ;
- Préparation d'une épreuve présentant une surface extérieure en substance cylindrique par moulage ou extrusion de ce mélange;
- Précuisson de cette épreuve à basse température (généralement de l'ordre de 600°);
- Dégrossissage de cette épreuve ;
- Réalisation d'au moins un relief (24) comprenant au moins une rainure hélicoïdale dextrogyre (24) et au moins une rainure hélicoïdale lévogyre (24) sur la surface latérale de cette pièce céramique;
- Frittage à haute température de cette épreuve de façon à obtenir un élément céramique cylindrique aux tolérances exigées pour la pièce finale ;
- Préchauffe de cet élément à une température compatible avec l'injection d'un matériau polymère ;
- Placement de cet élément céramique dans un moule de surmoulage préchauffé;
- Injection dans le moule de surmoulage d'un matériau polymère ;
- Refroidissement et extraction de la pièce composite obtenue hors du moule de surmoulage ;
- Répartition par les rainures des tensions susceptibles de se produire à l'interface de la pièce composite lorsque celle-ci est soumise à un gradient thermique.

Suivant un mode de réalisation préférée, ce procédé comprend en outre un recuit de la pièce composite obtenue par surmoulage.

Suivant un mode de réalisation préférée, le rainurage de l'élément céramique est réalisé par usinage après précuisson. Toutefois, tout ou partie de ce rainurage peut également être préparé lors du moulage ou après frittage de l'élément.

### Brève description des figures

D'autre particularités et avantages de l'invention seront clarifiés dans la description détaillée de modes de réalisation particuliers de l'invention ci-après, référence étant faite aux figures, dans lesquelles :
- Les Fig.01 à 05: sont des vues schématiques en coupe de différentes étapes du procédé de frettage utilisé dans l'art antérieur pour assembler des éléments céramiques et métalliques ;
- Fig. 1 à 5: sont des vues schématiques en coupe de différentes étapes du procédé de surmoulage suivant l'invention permettant d'associer durablement des éléments céramiques et polymères dans le cas de structures femelles ;
- Les Fig. 6 à 10: sont des vues similaires aux vues 1 à 5 dans le cas de structures mâles ;
- Les Fig 11 et 12: sont des vues en coupe comparant des contraintes réciproques s'exerçant sur les éléments céramiques dans le cas d'un frettage et dans le cas d'un surmoulage.
- Fig. 13 et 14: sont des vues schématiques en coupe d'un détail respectivement des Fig 11 et 12 ;
- La Fig. 15: est une vue en élévation d'un élément en céramique femelle utilisé pour le procédé de surmoulage suivant l'invention ;
- La Fig. 16: est une vue en coupe suivant le plan XVI-XVI de l'élément de la Fig.15.

Les figures ne sont pas dessinées à l'échelle. Généralement, des éléments semblables sont dénotés par des références semblables dans les figures.

### Description détaillée de modes de réalisation particuliers

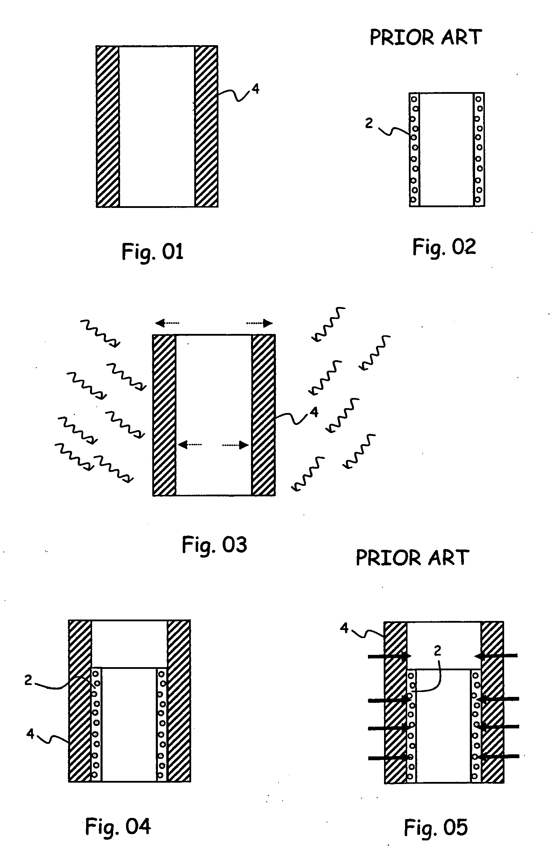

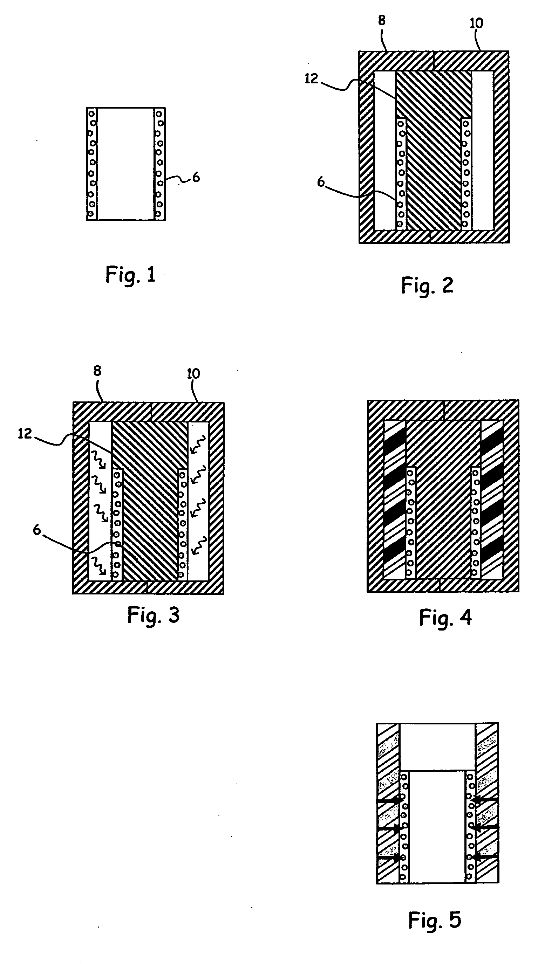

Les Fig.01 à 05 reprennent les différentes étapes du procédé de frettage antérieurement développé pour assembler des éléments céramiques et métalliques pour la réalisation de pièces composites susceptibles de répondre aux contraintes imposées par les industries de conditionnement.

La fig 02 montre un élément en forme de manchon en céramique 2, défini comme un élément « femelle ». Les qualités de la céramique font qu'un tel élément est idéal pour former le chemisage intérieur d'une chambre de pompe pour le conditionnement de fluides, de produits pâteux ou pulvérulents. Toutefois, en tant que tel, ce manchon est virtuellement inutilisable, puisqu'il est excessivement difficile de le solidariser à d'autres pièces d'un circuit sans risque de l'endommager. Une solution est de l'enchâsser dans un cylindre en acier inoxydable 4, comme représenté à la Fig.04. Ce cylindre 4 peut être muni par différents procédés connus (soudage, brasage, moulage) de différents accessoires rapportés (non représentés, par soucis de clarté). Ce cylindre 4 est usiné intérieurement de façon à ce que son diamètre intérieur corresponde sensiblement au diamètre du manchon 2. Il est chauffé, de façon à augmenter son diamètre (Fig. 03), et le manchon y est inséré (Fig. 04). Après refroidissement, la rétraction du diamètre du cylindre 4 maintient le manchon en céramique 2 fermement en place (Fig.05). Les conditions de chauffage, la composition du métal, la température, etc. sont évidemment calculées de façon à obtenir une solidarisation optimale des deux composants Le procédé de surmoulage de l'invention est montré en se référant aux Fig. 1 à 5. Après fabrication suivant le procédé précédemment décrit, le manchon en céramique 6 suivant l'invention (Fig.1) est d'abord préchauffé, de façon à atteindre une température compatible avec l'injection d'un matériau polymère sélectionné. Cette étape préliminaire est importante car la différence de température entre les différents éléments, ce y compris la température du polymère et celle des éléments de moule, peut entraîner la création de tensions au sein du matériau. Le manchon est ensuite placé dans un moule d'injection en acier en deux parties 8, 10, lui aussi préalablement préchauffé (Fig.2), après avoir été enfilé sur un noyau métallique 12 (Fig.3).

Un matériau polymère est injecté dans l'intervalle subsistant entre les deux parties du moule 8, 10, le noyau 12 et le manchon 6 (Fig.4). La Fig.5 représente le manchon 6 à l'état terminal : le matériau polymère s'est refroidi et rétracté, et forme une enveloppe 14 qui exerce sur le manchon céramique 6 une pression solidarisant intimement les deux éléments. Pour dissiper une partie des tensions engendrées lors du moulage, on procède généralement, en outre, à ce stade, à un recuit de la pièce composite, ce qui est en soi une opération peu courante pour les polymères. On dispose désormais d'un élément composite capable de supporter des contraintes thermiques importantes sans se déformer, qui peut être utilisé par exemple comme chambre pour une pompe de dosage, comme élément de raccord (insert), comme corps pour un distributeur à boisseau, etc.

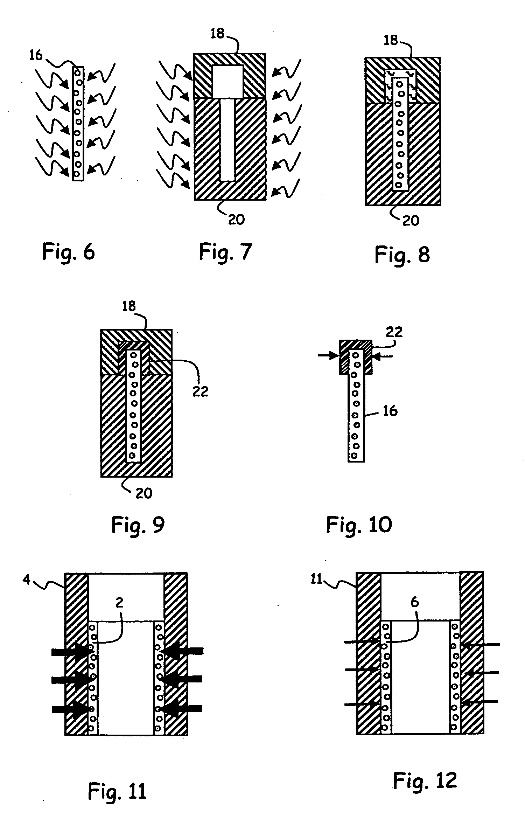

Les Fig.6 à 10 montrent que le procédé s'applique également à des éléments cylindriques mâles. On utilise ici un cylindre plein en céramique 16. Ce cylindre 16, après avoir été préchauffé (Fig.6) est placé dans un moule préchauffé (Fig.7) formé ici de deux parties 18, 20, qui laisse subsister un vide autour d'une des extrémités du cylindre 16 (Fig.8). Un matériau polymère est injecté dans le moule (Fig.9). Après refroidissement et démoulage, l'extrémité du cylindre 16 est désormais garnie d'une gaine 22 (Fig.10), ce qui permet, après un recuit comme décrit précédemment, de l'utiliser entre autres comme piston pour un corps de pompe fabriqué comme montré aux fig. 1 à 5. Les deux éléments du piston sont solidarisés à la fois par adhérence et par la pression due à la rétractation de la gaine 22 autour du cylindre 16.

Il va de soi que les moules, représentés ici en deux parties, peuvent comprendre en pratique un nombre indéterminé de parties fixes ou mobiles, en fonction de la complexité de la pièce (enveloppe 14, gaine 22) à réaliser.

Les Fig.11 et 12 mettent en évidence un des problèmes cruciaux qui se posent à l'homme du métier lorsque l'on passe de la méthode de solidarisation par frettage à la méthode de solidarisation par surmoulage : Dans le cas du frettage (Fig.11), il « suffit », lors de l'étape de préchauffe montrée à la Fig.03, de choisir une température largement supérieure à la température maximum de fonctionnement de la pièce composite pour écarter tout danger de désolidarisation entre la chemise 2 et son enveloppe 6. A la condition expresse, bien sûr, que la chemise 2 et l'enveloppe 4 soient conçues de façon à supporter en permanence la pression exercée à l'interface. Par ailleurs, le métal de l'enveloppe est généralement choisi de façon à présenter un coefficient de dilatation aussi faible que possible pour se rapprocher des caractéristiques de la céramique.

Dans le cas du surmoulage (Fig.12), on se trouve devant un problème nettement plus complexe. On observe, certes, un excellent coefficient d'adhérence entre la chemise 6 et l'enveloppe 14, mais la pression exercée par le matériau polymère sur le manchon est infiniment moindre, et surtout, la résistance au cisaillement d'un matériau polymère est sans commune mesure avec celle d'un métal.

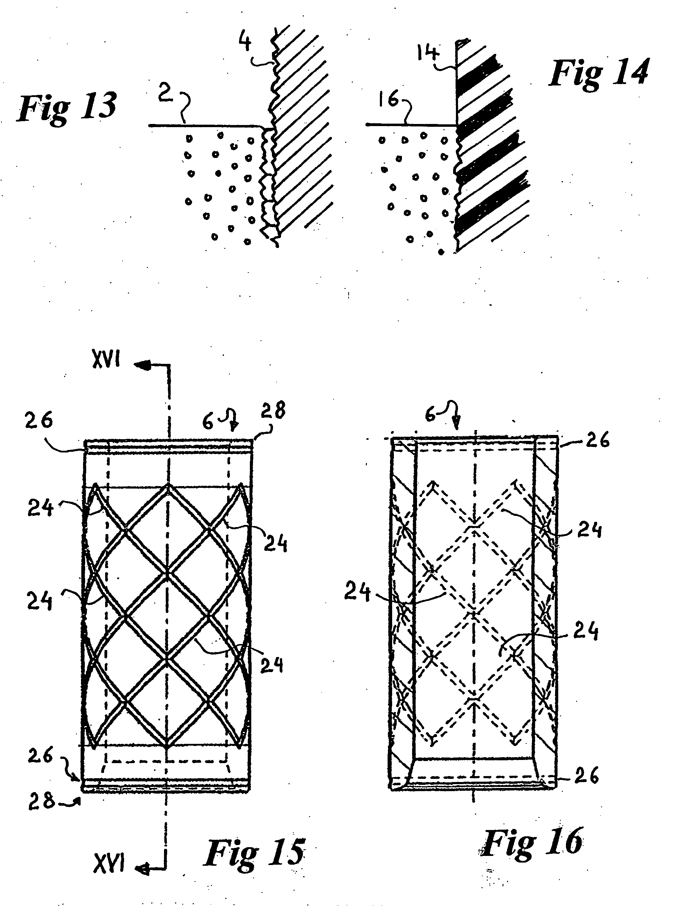

Une vue à l'échelle macroscopique des interfaces céramique-métal et céramique-polymère des fig. 11 et 12 est représentée aux Fig. 13 et 14. Dans le cas du frettage (Fig 13), les surfaces en contact présentent des rugosités et des irrégularités qui, certes, contribuent à améliorer la solidarisation entre des deux pièces, mais délimitent également un interstice dans lequel peuvent se glisser des résidus et des impuretés. Dans le cas notamment de l'industrie pharmaceutique ou alimentaire, ces interstices constituent de véritables nids à microbes, qu'il n'est possible d'éviter que par l'adjonction de joints ou de matériaux de remplissage, solutions à éviter car souvent précaires ou peu fiables. Dans le cas du surmoulage (Fig. 14), le matériau polymère forme lui-même le moyen de rejointoiement, et l'on est assuré de bénéficier d'une hygiène sans faille tant que les deux pièces restent solidaires.

La solution réside à la fois dans un choix judicieux des matériaux en présence et dans la réalisation non évidente d'une interface particulière céramique-polymère, dont un exemple de réalisation est montré aux Fig. 15 et 16.

La simple juxtaposition des matériaux devant inévitablement entraîner des tensions et des mouvements relatifs au sein des pièces composites, on a choisi de ménager sur l'interface des reliefs empêchant d'une part tout mouvement relatif et, d'autre part, répartissant les tensions engendrées de façon suffisamment uniforme pour éviter la dissociation des pièces et l'apparition de fissures.

Selon l'invention et tel que représenté aux Fig. 15 et 16, après avoir subi une précuisson, la pièce en céramique 6 a été usinée de façon à ménager une série de reliefs le long sa paroi externe. Ces reliefs s'étendent à la fois dans le sens longitudinal et dans le sens radial. On remarque notamment des rainures spiralées 24. Certaines de ces rainures 24 sont dextrogyres, d'autres lévogyres, de façon à former un entrecroisement le long de pratiquement toute la partie de la paroi destinée à venir en contact avec l'enveloppe surmoulée. On remarque en outre la présence de rainures périphériques 26 ménagées près des extrémités du manchon. Le rôle de ces rainures est, bien sûr, d'assurer la solidarisation réciproque des éléments 6 et 14, mais surtout, comme expliqué plus haut, de répartir les efforts s'exerçant dans le matériau polymère du fait de tensions engendrées par les gradients thermiques résultant des différences entre le coefficient de dilatation de la céramique et du matériau polymère. On a mesuré sur des éprouvettes tant la résistance aux chocs thermiques que la résistance à l'arrachement d'un élément composite céramique - polymère pour différentes profondeurs des rainures 24 et 26, pour différentes densités de rainurage (nombre de rainures par cm) et pour différentes sortes de polymères, de même qu'en l'absence de tout réseau de rainures. Les résultats des essais de résistance à l'arrachement, ont permis de démontrer qu'en l'absence de rainurage ou pour des rainures ne dépassant pas 0.10 mm, on constate une désolidarisation rapide des deux composants et/ou l'apparition de fissures dans le polymère, preuve de la présence de tensions très localisées. Par contre, l'approfondissement des rainures à 0.25 voire 0.40mm et la croissance de leur densité ont des effets positifs : les deux matériaux restent parfaitement solidaires (absence de déplacement relatif, mesurée en millimètre, sous contrainte en Newton). Cette progression n'est toutefois pas illimitée : au-delà d'un seuil critique, l'accroissement des dimensions des rainures entraîne l'apparition de phénomènes parasites (épaisseur excessive du film de polymère donnant lieu à des inhomogénéités, remplissage incomplet des rainures), qui dégradent les résultats.

L'analyse des tensions montre par ailleurs un effet paradoxal, qui corrobore cependant la présente analyse : la présence d'angles vifs à l'interface céramique-polymère, qui favoriser l'immobilisation relative des composants, est loin d'entraîner, comme on serait en droit de s'y attendre, des effets favorables. Elle a elle au contraire des effets défavorables, car elle entraîne une localisation les contraintes dans le polymère, ce qui dégrade les performances observées. On a donc pris soin, lors du moulage des rainures et de toutes des parties de l'interface, de ménager des congés, des arrondis ou des chanfreins 28 - dans la mesure du possible- pour chaque transition entre deux surfaces.

On conçoit que l'usinage de pièces en céramique, matériau particulièrement dur, cassant et fragile, est une solution qui ne viendra pas spontanément à l'homme du métier, et que la solution adoptée est donc tout sauf évidente.

Il apparaîtra par ailleurs évident pour l'homme du métier que la présente invention n'est pas limitée aux exemples illustrés et décrits ci-dessus. L'invention comprend chacune des caractéristiques nouvelles ainsi que leur combinaison. La présence de numéros de référence ne peut être considérée comme limitative. L'usage du terme « comprend » ne peut en aucune façon exclure la présence d'autres éléments autres que ceux mentionnés. L'usage de l'article défini « un » pour introduire un élément n'exclut pas la présence d'une pluralité de ces éléments. La présente invention a été décrite en relation avec des modes de réalisations spécifiques, qui ont une valeur purement illustrative et ne doivent pas être considérés comme limitatifs.

On remarquera notamment que le façonnage des reliefs de l'interface, réalisé ici par usinage lors du dégrossissage, pourrait éventuellement être réalisé lors du moulage, et/ou au moins complété par usinage après cuisson définitive. En pratique, toutefois, le façonnage de la partie en céramique par moulage implique un investissement extrêmement élevé, car il est nécessaire de recourir à un moule complexe comprenant un grand nombre de pièces mobiles. Par ailleurs, il faut tenir compte de l'opération de dégrossissage intermédiaire de l'épreuve précuite. Un tel investissement ne serait rentable que dans l'éventualité de la réalisation d'un très grand nombre de pièces identiques, ce qui n'est pas fréquent dans le domaine concerné. La préparation des reliefs après le dégrossissage permet d'éviter de travailler sur un matériau extrêmement dur, qui requiert un long temps-machine, évidemment très coûteux, mais il faut tenir compte du fait que, bien que l'on ait recours à l'utilisation d'outils diamantés, l'épreuve est à ce moment très fragile et que le nombre de pièces de rebut est relativement important.

## Revendications

1. Organe d'un élément de dosage de fluide, de produit pâteux ou pulvérulent présentant une surface extérieure en substance cylindrique apte à résister à des gradients thermiques et/ou des sollicitations mécaniques qui comprend, disposés concentriquement l'un par rapport à l'autre :
- une partie en matériau céramique (6, 16) destinée à venir en contact avec le fluide, présentant une surface extérieure en substance cylindrique,
- un support en matériau polymère (14, 22) surmoulé sur la partie en matériau céramique (6, 16),
**caractérisé en ce que** la partie en matériau céramique (6, 16) porte, sur sa face latérale externe, au moins un relief (24) empêchant tout mouvement relatif de cette partie et du support et répartissant les tensions engendrées par la différence entre les coefficients de dilatation des matériaux céramique et polymère, cet au moins un relief (24) comprenant au moins une rainure hélicoïdale (24) dextrogyre et au moins une rainure hélicoïdale (24) lévogyre s'étendent sur la surface de la partie céramique en contact avec le support en matériau polymère.

2. Organe selon la revendication 1, **caractérisé en ce que** la partie en matériau céramique (6, 16) est une pièce femelle (6) en forme de fourreau, le support en matériau polymère formant une enveloppe (14) surmoulée sur sa face latérale extérieure de ce fourreau (6) en céramique.

3. Organe selon la revendication 2, **caractérisé en ce que** cet organe est un corps de pompe ou un insert.

4. Organe selon la revendication 1, **caractérisé en ce que** la partie en matériau céramique (6, 16) est une pièce cylindrique mâle (16), le support en matériau polymère formant une enveloppe (22) recouvrant une des extrémités de la face latérale extérieure de cette pièce cylindrique (16).

5. Organe selon la revendication 4, **caractérisé en ce que** cet organe est un piston.

6. Organe selon l'une quelconque des revendications précédentes, **caractérisé en ce qu'**il comprend en outre au moins une rainure périphérique (26) disposée près d'au moins une des extrémités de la surface de la partie en céramique en contact avec le support en matériau polymère.

7. Organe selon l'une quelconque des revendications précédentes, **caractérisé en ce que** l'au moins un relief (24) est formé par usinage, avec enlèvement de matière.

8. Organe selon l'une quelconque des revendications précédentes, **caractérisé en ce que** l'au moins un relief (24) a une profondeur comprise entre 0,25 et 0,40 mm.

9. Organe selon l'une quelconque des revendications précédentes, **caractérisé en ce que** le matériau céramique est choisi parmi le groupe [alumine, zircone, nitrure de silicium, et leurs composés].

10. Organe selon l'une quelconque des revendications précédentes, **caractérisé en ce que** le polymère du support est choisi parmi le groupe [PPS, PPSU, PSU, PEEK, PEI, PES, PVDF]

11. Organe selon l'une quelconque des revendications précédentes, **caractérisé en ce qu'**une extrémité au moins de la partie en céramique (6, 16) en contact avec le support en matériau polymère est chanfreinée.

12. Procédé de fabrication d'un organe d'un élément de dosage de fluide composite présentant une interface en substance cylindrique apte à résister à des écarts de température et/ou des sollicitations mécaniques, **caractérisé en ce qu'**il comprend les opérations suivantes :
- Préparation d'un mélange de composition adéquate pour l'obtention après cuisson d'un matériau céramique adapté à l'usinage;
- Préparation d'une épreuve présentant une surface extérieure en substance cylindrique par moulage ou extrusion de ce mélange;
- Précuisson de cette épreuve à basse température ;
- Dégrossissage de cette épreuve ;
- Réalisation d'au moins un relief (24) comprenant au moins une rainure hélicoïdale dextrogyre (24) et au moins une rainure hélicoïdale lévogyre (24) sur la surface latérale de cette pièce céramique ;
- Frittage à haute température de cette épreuve, de façon à obtenir une pièce céramique (6, 16) de dimensions adéquates ;
- Préchauffe de cette pièce céramique à une température compatible avec le contact d'un matériau polymère ;
- Placement de cette pièce céramique dans un moule de surmoulage préchauffé ;
- Injection dans le moule de surmoulage d'un matériau polymère ;
- Refroidissement et extraction de la pièce composite obtenue hors du moule de surmoulage ; et
- Répartition par le au moins un relief (24) des tensions susceptibles de se produire à l'interface de la pièce composite lorsque celle-ci est soumise à un choc thermique.

13. Procédé de fabrication suivant la revendication 12 **caractérisé en ce que** la réalisation de reliefs sur la surface latérale de l'élément céramique est réalisé par usinage au moment du dégrossissage de l'épreuve, après précuisson à basse température.

14. Procédé de fabrication suivant l'une des revendications 12 ou 13 **caractérisé en ce qu'**il comprend en outre l'opération suivante :
- Recuit de la pièce composite obtenue par surmoulage.

15. Procédé de fabrication suivant l'une des revendications 12 à 14 **caractérisé en ce que** les reliefs sont préformés lors du moulage et/ou usinés après frittage à haute température.

## Claims

1. Member of a composite element for feeding fluid, pasty or powdery product having an outer surface that is substantially cylindrical able to withstand thermal gradients and/or mechanical stresses that comprises, arranged concentrically relative to each other:
- A part made of ceramic material (6, 16) designed to come into contact with the fluid, having an outer surface that is substantially cylindrical,
- A support made of polymer material (14, 22) overmoulded on the part made of ceramic material (6, 16),
**characterized in that** the part made of ceramic material (6, 16) has, on its external lateral face, at least one relief (24) preventing any relative movement of this part and of the support and distributing the tensions generated by the difference between the expansion coefficients of the ceramic and polymer materials, this at least one relief (24) comprising at least one dextrogyral helical groove (24) and at least one levogyral helical groove (24) extending over the surface of the ceramic part in contact with the support made of polymer material.

2. Member according to Claim 1, **characterized in that** the part made of ceramic material (6, 16) is a female piece (6) in the form of a sheath, the support made of polymer material forming a jacket (14) overmoulded on its external lateral face of this sheath (6) made of ceramic.

3. Member according to Claim 2, **characterized in that** this member is a pump body or an insert.

4. Member according to Claim 1, **characterized in that** the part made of ceramic material (6, 16) is a male cylindrical piece (16), the support made of polymer material forming a jacket (22) covering one of the ends of the external lateral face of this cylindrical piece (16).

5. Member according to Claim 4, **characterized in that** this member is a piston.

6. Member according to any one of the preceding claims, **characterized in that** it also comprises at least one peripheral groove (26) arranged close to at least one of the ends of the surface of the part made of ceramic in contact with the support made of polymer material.

7. Member according to any one of the preceding claims, **characterized in that** the at least one relief (24) is formed by machining, with the removal of material.

8. Member according to any one of the preceding claims, **characterized in that** the at least one relief (24) has a depth of between 0.25 and 0.40 mm.

9. Member according to any one of the preceding claims, **characterized in that** the ceramic material is chosen from the group comprising [alumina, zirconia, silicon nitride, and their compounds].

10. Member according to any one of the preceding claims, **characterized in that** the polymer of the support is chosen from the group comprising [PPS, PPSU, PSU, PEEK, PEI, PES, PVDF].

11. Member according to any one of the preceding claims, **characterized in that** at least one end of the part made of ceramic (6, 16) in contact with the support made of polymer material is chamfered.

12. Method of manufacturing a member of a composite element for feeding fluid, pasty or powdery product having an outer surface that is substantially cylindrical able to withstand thermal gradients and/or mechanical stresses, **characterized in that** it comprises the following operations:
- Preparation of a mixture of appropriate composition to obtain, after baking, a ceramic material suitable for machining;
- Preparation of a proof piece having an outer surface that is substantially cylindrical by moulding or extruding this mixture;
- Prebaking of this proof piece at low temperature;
- Rough-turning of this proof piece;
- Production of at least one relief (24) comprising at least one dextrogyral helical groove and at least one levogyral helical groove extending over the external lateral surface of this proof piece;
- High-temperature sintering of this proof piece, so as to obtain a ceramic element (6, 16) of suitable dimensions;
- Preheating of this ceramic element to a temperature compatible with the contact of a polymer material;
- Placement of this ceramic element in a preheated overmoulding mould;
- Injection into the overmoulding mould of a polymer material; and
- Cooling and extraction of the composite piece obtained from the overmoulding mould.
- Distribution by the at least one relief (24) of the tensions possibly arising at the interface of the composite member when the latter is submitted to a thermical shock.

13. Manufacturing method according to Claim 12, **characterized in that** the production of reliefs on the external lateral surface of the ceramic element is produced by machining when the proof piece is rough-turned, after prebaking at low temperature.

14. Manufacturing method according to one of Claims 12 or 13, **characterized in that** it also comprises the operation for annealing the composite piece obtained by overmoulding.

15. Manufacturing method according to one of Claims 12 to 14, **characterized in that** the reliefs are preformed at the moulding stage and/or machined after sintering at high temperature.

## Patentansprüche

1. Organ eines Elements zur Dosierung eines Fluids, eines pastenförmigen oder pulverförmigen Produkts, das eine im Wesentlichen zylindrische Außenfläche aufweist, die geeignet ist, Wärmegradienten und/oder mechanischen Beanspruchungen standzuhalten, das zueinander konzentrisch angeordnet:
- ein Teil aus Keramikmaterial (6, 16), das dazu bestimmt ist, mit dem Fluid in Kontakt zu kommen, das eine im Wesentlichen zylindrische Außenfläche aufweist,
- einen Träger aus Polymermaterial (14, 22), der um das Teil aus Keramikmaterial (6, 16) gespritzt ist, umfasst
**dadurch gekennzeichnet, dass** das Teil aus Keramikmaterial (6, 16) auf seiner äußeren Seitenfläche mindestens ein Relief (24) trägt, das jegliche Bewegung bezogen auf dieses Teil und den Träger verhindert und die Spannungen verteilt, die durch die Unterschiede zwischen den Ausdehnungskoeffizienten der Keramik- und Polymermaterialien erzeugt werden, wobei dieses mindestens eine Relief (24) mindestens eine rechtsdrehende Wendelnut (24) und mindestens eine linksdrehende Wendelnut (24) umfasst, die sich auf der Fläche des Keramikteils erstrecken, die mit dem Träger aus Polymermaterial in Kontakt ist.

2. Organ nach Anspruch 1, **dadurch gekennzeichnet, dass** das Teil aus Keramikmaterial (6, 16) ein Mutterteil (6) in Form einer Hülle ist, wobei der Träger aus Polymermaterial einen Überzug (14) bildet, der auf seiner äußeren Seitenfläche mit dieser Keramikhülle (6) umspritzt ist.

3. Organ nach Anspruch 2, **dadurch gekennzeichnet, dass** dieses Organ ein Pumpengehäuse oder ein Einsatz ist.

4. Organ nach Anspruch 1, **dadurch gekennzeichnet, dass** das Teil aus Keramikmaterial (6, 16) ein zylindrisches Vaterstück (16) ist, wobei der Träger aus Polymermaterial einen Überzug (22) bildet, der eines der Enden der seitlichen Außenfläche dieses zylindrischen Teils (16) bedeckt.

5. Organ nach Anspruch 4, **dadurch gekennzeichnet, dass** dieses Organ ein Kolben ist.

6. Organ nach einem der vorhergehenden Ansprüche, **dadurch gekennzeichnet, dass** es ferner mindestens eine umlaufende Nut (26) umfasst, die in der Nähe mindestens einer der Enden der Fläche des Keramikteils angeordnet ist, das mit dem Träger aus Polymermaterial in Kontakt ist.

7. Organ nach einem der vorhergehenden Ansprüche, **dadurch gekennzeichnet, dass** das mindestens eine Relief (24) durch maschinelle Bearbeitung gebildet wird, wobei Material entfernt wird.

8. Organ nach einem der vorhergehenden Ansprüche, **dadurch gekennzeichnet, dass** das mindestens eine Relief (24) eine Tiefe im Bereich zwischen 0,25 und 0,40 mm hat.

9. Organ nach einem der vorhergehenden Ansprüche, **dadurch gekennzeichnet, dass** das Keramikmaterial aus der Gruppe [Aluminiumoxid, Zirkonoxid, Siliciumnitrid und deren Verbindungen] ausgewählt ist.

10. Organ nach einem der vorhergehenden Ansprüche, **dadurch gekennzeichnet, dass** das Polymer des Trägers aus der Gruppe [PPS, PPSU, PSU, PEEK, PEI, PES, PVD] ausgewählt ist.

11. Organ nach einem der vorhergehenden Ansprüche, **dadurch gekennzeichnet, dass** mindestens ein Ende des Keramikteils (6, 16), das mit dem Träger aus Polymermaterial in Kontakt ist, abgeschrägt ist.

12. Verfahren zur Fertigung eines Organs eines Verbundelements zur Dosierung von Fluid, das eine im Wesentlichen zylindrische Schnittstelle aufweist, die geeignet ist, Temperaturgefällen und/oder mechanischen Beanspruchungen standzuhalten, **dadurch gekennzeichnet, dass** es die folgenden Arbeitsgänge umfasst:
- Herstellen eines Gemischs mit geeigneter Zusammensetzung zum Erhalten, nach dem Brennen, eines Keramikmaterials, das an die maschinelle Bearbeitung angepasst ist;
- Herstellen eines Prüfstücks, das eine im Wesentlichen zylindrische Außenfläche aufweist, durch Formgießen oder Extrusion dieses Gemischs;
- Vorbrennen dieses Prüfstücks bei niedriger Temperatur;
- Schruppen dieses Prüfstücks;
- Ausführen mindestens eines Reliefs (24), das mindestens eine rechtsdrehende Wendelnut (24) und mindestens eine linksdrehende Wendelnut (24) auf der Seitenfläche dieses Keramikteils umfasst;
- Hochtemperatursintern dieses Prüfstücks, um ein Keramikteil (6, 16) mit passenden Abmessungen zu erhalten;
- Vorerhitzen dieses Keramikteils auf eine Temperatur, die mit dem Kontakt eines Polymermaterials kompatibel ist;
- Anordnen dieses Keramikteils in einer vorerhitzten Overmoulding-Form;
- Einspritzen eines Polymermaterials in die Overmoulding-Form;
- Abkühlen und Herausnehmen des erhaltenen Verbundteils aus der Overmoulding-Form; und
- Verteilen der Spannungen, die sich an der Schnittstelle des Verbundteils bilden können, wenn dieses einem thermischen Schock ausgesetzt wird, durch das mindestens eine Relief (24).

13. Verfahren zur Fertigung gemäß Anspruch 12, **dadurch gekennzeichnet, dass** die Ausführung des Reliefs auf der Seitenfläche des Keramikelements durch maschinelle Bearbeitung während des Schruppens des Prüfstücks nach dem Vorbrennen bei niedriger Temperatur ausgeführt wird.

14. Verfahren zur Fertigung gemäß einem der Ansprüche 12 oder 13, **dadurch gekennzeichnet, dass** es ferner den folgenden Arbeitsvorgang umfasst:
- Glühen des Verbundteils, das durch Overmoulding erhalten wurde.

15. Verfahren zur Fertigung gemäß einem der Ansprüche 12 bis 14, **dadurch gekennzeichnet, dass** die Reliefs während des Formgießens vorgeformt und/oder nach dem Hochtemperatursintern maschinell bearbeitet werden.
